Europäisches Patentamt

European Patent Office

Office européen des brevets

(19)

(11) Publication number: **0 206 760**
**A2**

(12) **EUROPEAN PATENT APPLICATION**

(21) Application number: **86304705.6**

(22) Date of filing: **18.06.86**

(51) Int. Cl.⁴: **C 09 J 7/02**, **B 41 N 5/02**, **B 41 F 27/12**

(30) Priority: **19.06.85 US 746362**

(43) Date of publication of application: **30.12.86**
**Bulletin 86/52**

(84) Designated Contracting States: **CH DE GB IT LI**

(71) Applicant: **MINNESOTA MINING AND MANUFACTURING COMPANY, 3M Center, P.O. Box 33427, St. Paul, Minnesota 55133-3427 (US)**

(72) Inventor: **Zenk, Robert E. c/o Minnesota Mining and, Manufacturing Co. 2501 Hudson Road P.O. Box 33427, St. Paul Minnesota 55133-3427 (US)**

(74) Representative: **Baillie, Iain Cameron et al, c/o Ladas & Parry Isartorplatz 5, D-8000 München 2 (DE)**

(54) **Mounting tape for flexographic printing plate.**

(57) An adhesive coated mounting tape for flexographic printing plates for reducing the magnitude of the vibrations in the printing plate during its operation on a cylinder. The mounting tape comprises a strong reinforcing layer, e.g. a laminate of a polymeric film and a polymeric foam, which foam has a low value for resonant frequency before achieving vibration isolation, thus affording increased printing speeds and improved print quality.

## Description
### Mounting Tape For Flexographic Printing Plate

#### Technical Field

This invention relates to an improvement in the mounting tape for a flexographic printing plate, and in one aspect to a tape having improved vibration isolation. characteristics to reduce the magnitude of the plate vibration in printing presses run at increased speeds.

#### Background Art

The present invention relates to an improvement in cushioned backings for mounting flexographic printing plates, e.g. rubber or resilient photopolymer plates, to print cylinders. Prior art mounting tapes have been marketed and such tapes have had as their primary purpose one of adhering the flexographic printing plates to the cylinder. In attempting to reduce the print or image distortion produced by resilient plate compression the plate vibration must be minimized. To achieve this, attention has been directed by those skilled in the art to providing better printing plates wherein the plates may have low durometer rubber backing materials supporting a high durometer printing face. In any event, these plates are mounted by adhesive tapes known as cushion stickybacks which are primarily intended to provide greater impression latitude. These stickybacks comprise a film or scrim reinforcing layer which supports a compressible foam with a pressure sensitive adhesive coated on the foam and on the reinforcing layer to mount a printing plate to a print cylinder. These cushion stickybacks have come in a variety of densities of closed and open cell foams.

The general findings of those providing an improved plate with the image made of material of higher durometer backed by a compressible underlayer are that the greater the amount of compressibility of the underlayer the better. In prior literature, compressibility has been determined to be an important feature. Thus, most of the inventive endeavor has been directed to a change in the construction of the printing plate per se by adding an underlayer of foam onto the printing plates. The increased compressibility of the plate was then intended to reduce compression of the plate image surface and thereby minimize the image gain or an increase in the dot diameter of the image areas of the printing plate. Therefore, a predetermined amount of compressibility to control the impression at the printing nip is achieved without the amount of force that would distort the image. Thus, compression of the underlayer without image gain was the intended target. A "kiss" impression, however, is more nearly obtainable when the amount of bounce in the printing plate is minimized. Thus, if one can reduce the amount of bounce at the printing plate surface by isolating the bounce within the cushion tape, the print quality can be improved.

The foam currently being sold by the assignee of the present invention is a (45 pound per cubic foot) 0.72 $g/cm^3$ very snappy and rubbery block copolymer foam which is (0.023 inch) 0.58 mm thick. Another product which is marketed is a (9 pound per cubic foot) 0.14 $g/cm^3$ closed cell polyethylene foam about (0.023 inch) 0.58 mm in thickness. It is equally acceptable in the market to the assignee's product, and, appears to have about equal quality to the assignee's product. A further competitive product is a (15 pound per cubic foot) 0.24 $g/cm^3$ open cell urethane foam, (0.060 inch) 1.52 mm thick. This product has less resilience and is no improvement over the other known types of stickyback such as that of the assignee as explained above.

The present invention is directed to a discovery that materials which allow the printing plate to have a lower resonant frequency compared to the operating frequency of the printing press and which have good resilience or elasticity provide improved mounting tapes permitting higher printing speed and improved print quality.

## Disclosure of Invention

The present invention relates to an improved mounting tape for flexographic rubber or photopolymer printing plates. The mounting tape of the present invention comprises a laminate of a strong reinforcing layer, e.g. a polymeric film or scrim and a layer of polymeric cellular foam having a certain density and thickness to provide a relatively low resonant frequency and a high degree of elasticity or spring constant. The foam material of the present invention affords isolation which reduces vibration in the printing plate and provides improved print quality at the higher printing speeds. A preferred example of the polymeric cellular foam material comprises a closed cell cross-linked polyethylene foam having a density of (4 pounds per cubic foot) 0.064 g/cm$^3$ and a thickness of generally (0.015 to 0.020 inch) 0.38 to 0.51 mm. This foam is laminated to a reinforcing layer, e.g. a tough polymeric film comprising a laminate of polyester and polyethylene which polyethylene layer permits the bonding of the foam layer to the polyester. Pressure sensitive adhesive is then coated on the polyester surface of the reinforcing layer and on the exposed surface of the foam material to adhere the foam on the printing cylinder and to adhere the printing plate to the film. Another suitable reinforcing layer is a nonwoven web of polymeric material, such as poly(hexamethylene adipamide).

## Brief Description of Drawing

The present invention will be further described with reference to the accompanying drawing wherein:

Figure 1 is an enlarged cross-sectional view of a flexographic printing plate mounting tape constructed according to the present invention; and

Figure 2 is a schematic side view of a print cylinder and backup roll with the flexographic plate mounted on the print cylinder.

0206760

Detailed Description

The mounting tape of the present invention is adapted for use in flexographic printing using rubber or resilient photopolymer plates. The mounting tape of the present invention is used for adhering the flexographic printing plate to the printing cylinder.

Printing cylinders for flexographic printing are usually relatively small having a diameter of (1.5 to 12 inches) 3.8 to 30.5 cm. The amount of compression for the printing plates at the nip area where the printing surface of the plate contacts the paper is across an area between about (0.155 and 0.44 inch) 3.94 and 11.2 mm times the length or axial dimension of the plate on the printing cylinder. The amount of compression of the mounting tape is generally about (0.004 inch) 0.10 mm, and when printing on most substrates, the interference matches that above-described. Thus, depending on the printing plate and the image thereon, a certain amount of vibration is developed in the plate as the printing cylinder is rotating to provide a printing speed of between (50 and 500 feet) 15 to 152 meters per minute on existing flexographic printers. It is desirable to increase this printing speed but yet not have any increase in the vibration at the printing surface of the plate, due either to the configuration of the plate or the printing cylinder.

The rubber printing plates may have a Shore "A" hardness of 70 to 90, and thus the non-compressibility of the plate causes increased vibration, resulting in image distortion and poorer print quality. Thus, the discovery of the present invention is to provide a mounting tape for the printing plate having a density, elasticity and thickness such that the resonant frequency of the tape assembly is relatively low and the spring constant is fairly high, affording vibration isolation at the printing surface at increased speeds. The result is improved print quality and greater economics.

In the drawing the preferred construction for the present invention is illustrated and comprises a layer of pressure sensitive adhesive 5 having a thickness of about (0.0015 inch) 0.038 mm and a layer of reinforcing material comprising a layer of polyester 6 laminated with a layer 8 of polyethylene which composite has a thickness of (0.001 to 0.0015 inch) 0.025 to 0.038 mm. The layer 8 of polyethylene permits the heat lamination of the strong polyester film 6 to a layer of foam 10. The foam 10 is preferably (4 pounds per cubic foot) 0.064 $g/cm^3$ closed cell polyethylene foam having a thickness of between (0.015 to 0.020 inch) 0.38 to 0.51 mm and preferably (0.0185 inch) 0.47 mm. To the foam material is also applied a coating of pressure sensitive adhesive 11 having a thickness of (0.0015 inch) 0.038 mm.

The foam layer of the present invention may however comprise foams of (2 to 6 pounds per cubic foot) 0.032 to 0.096 $g/cm^3$ and of thicknesses between (0.015 and 0.125 inch) 0.38 and 3.18 mm. The foam may be made of materials other than polyethylene, for example, silicone or ethylene-propylene diene rubber. These materials, however, have increased cost which is not attractive commercially.

Suitable foams for use in the mounting tape of the present invention may be tested as to their suitability for use in the mounting tape. A test for the suitability of such foams comprises the following:

Place a (one square inch) 6.54 $cm^2$ area of the foam sample of whatever thickness is present in the sample, or desired, and place the sample on an exciter table. This sample should be adhered to the exciter table by a pressure sensitive adhesive.

Place a 500 gram weight on the opposite side of the sample and adhere the same to the sample with a pressure sensitive adhesive. Attach an accelerometer to the weight by gluing the same to the top of the weight.

Sweep the exciter with a frequency oscillator. Direct the signal output (the acceleration) from the accelerometer to a real time analyzer. The signal at the analyzer is read using a peak frequency response with exponential averaging. A plot of the accelerometer output is then obtained and is preferably obtained in the range from 70 Hz to 2.5 KHz.

From these amplitude-frequency plots it is possible to determine the resonant frequency of the foam material.

Using the resonant frequency ($F_R$) a dynamic spring constant can be calculated.

Specifically, the equations used are:

$$F_R = \frac{1}{2} \frac{K}{m}$$

wherein m equals the mass of the system determined by the weight W divided by the acceleration of gravity "G" (386.4 in/sec$^2$ or 9.81 m/sec$^2$). The dynamic spring constant K, is determined as follows:

$$K = \frac{(2 \ F_R)^2 W}{G}$$

From the measurement of several samples it is determined that the preferred foam material would be material having a resonant frequency according to this test method of between about 150 to 300 Hz, and a dynamic spring constant between (2000 and 10,000 pounds/inch) 357 kg/cm and 1785 kg/cm.

The specific test equipment used in the test comprises, from Bruel and Kjaer of Marlborough, Massachussetts, a 4805 exciter body, 4812 exciter head, a 2307 level recorder, 1017 Beat Frequency Oscillator, a 2707 power amplifier, 2635 charge amplifier, and a 4637 accelerometer. The real time analyzer was from Hewlett Packard of Loveland, Colorado, U.S.A. Model 3582A.

In testing the sample of the preferred embodiment the resonant frequency was measured at 220 Hz with a K value of (5,500 pounds per inch) 982 kg/cm. A sample of (4 pound per cubic foot) 0.064 g/cm$^3$ closed cell polyethylene

foam with a thickness of (0.039 inch) 0.99 mm had a resonant frequency of 150 Hz and a spring constant of (2,600 pound per inch) 464 kg/cm. A sample of (4 pound per cubic foot) 0.064 g/cm$^3$ closed cell polyethylene (0.125 inch) 3.18 mm thick had a resonant frequency of 220 Hz and a K value of (5600 pound/inch) 1000 kg/cm. A sample of polyethylene closed cell foam having a density of (1.6 pounds per cubic foot) 0.026 g/cm$^3$ and a thickness of (0.040 inch) 1.02 mm had a resonant frequency of 190 Hz and a K value of (4200 pounds per inch) 750 kg/cm. A sample of (2 pound per cubic foot) 0.032 g/cm$^3$ polyethylene closed cell foam (0.121 inch) 3.02 mm thick had an unacceptable resonant frequency of 40 Hz and a spring constant of (190 pounds per inch) 33.9 kg/cm. Closed cell polyethylene foam of (6 pounds per cubic foot) 0.096 g/cm$^3$ having a thickness of (0.060 inch) 1.52 mm had a resonant frequency of 260 Hz and a K value of (7,800 pounds per inch) 1392 kg/cm. A sample of (6 pound per cubic foot) 0.096 g/cm$^3$ polyethylene closed cell foam with a thickness of (0.039 inch) 0.99 mm had a resonant frequency of 290 Hz and a K constant of (9,700 pounds per inch) 1731 kg/cm.

Thus, acceptable thicknesses for (4 pound per cubic foot) 0.064 g/cm$^3$ polyethylene foam is between (0.015 inch and 0.125 inch) 0.38 and 0.51 mm. Heavier, (6 pound per cubic foot) 0.096 g/cm$^3$ polyethylene closed cell foam may have a thickness between (0.039 inch and 0.125 inch) 0.99 and 3.18 mm and be acceptable. Polyethylene foam of (2 pound per cubic foot) 0.032 g/cm$^3$ can have a thickness between (0.015 and 0.060 inch) 0.38 and 1.5 mm.

In testing a competitive (15 pound per cubic foot) 0.24 g/cm$^3$, open cell urethane foam the resonant frequency was 470 Hz with a spring constant of (25,500 pound/inch) 4552 kg/cm. A second competitor's product using (9 pound per cubic foot) 0.144 g/cm$^3$ closed cell polyethylene foam had a resonant frequency of 340 Hz and a spring constant of (13,200 pounds per inch) 2356 kg/cm.

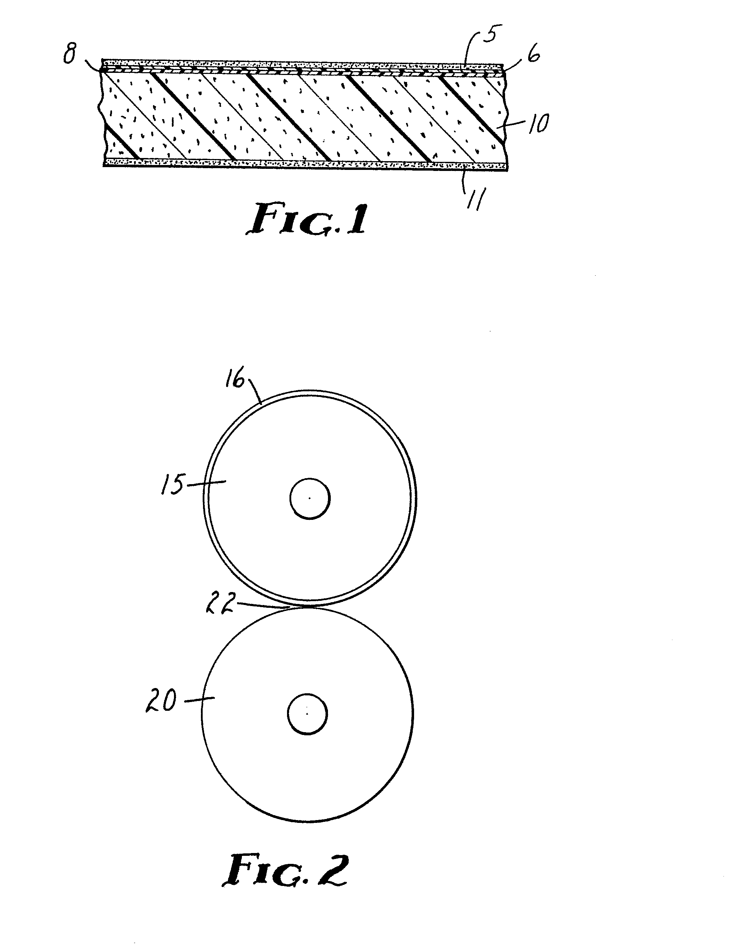

Figure 2 of the drawing illustrates a print cylinder 15 on which is mounted a flexographic plate 16 by the use of a mounting tape or cushion stickyback composed of laminated layers as described above in connection with Figure 1 of the drawing. Opposite the print cylinder 15 is a backup roller 20 of polished metal. The nip between the roller 20 and the print cylinder 15 is adjustable to control the nip 22 between the plate 16 and roller 20.

Thus, in practicing the present invention it is noted that the foam material suitable for reducing the magnitude of vibration and improving print quality is a foam having a resonant frequency, according to the test procedure outlined above, of 150 to 300 Hz and a dynamic spring constant of between about (2000 and 10,000 pounds per inch) 357 and 1785 kg/cm. A preferred (4 pound per cubic foot) 0.064 $g/cm^3$ polyethylene foam is a stablized closed cell foam such as type E polyethylene foam available from Voltek Inc. of 100 Shepard Street, Lawrence, Massachusetts, U.S.A. 01843.

As an alternative, the reinforcing layer may comprise a layer of scrim such as that material sold by Monsanto Company of Research Triangle Park, North Carolina 27709, U.S.A. under the tradename "Cerex" which is a spunbonded 100% nylon 66, non-woven web. The web is formed by a poly/hexamethylene adipamide). The web used would have a weight of (0.3 oz./sq. yard) 8.5 gms/0.84 square meter.

CLAIMS

1. A mounting tape for mounting a flexographic printing plate to a printing cylinder, said tape comprising a laminate comprising a layer of polymeric cellular foam and a layer of pressure sensitive adhesive characterized in that a layer of strong reinforcing material is adhered between said foam layer and said adhesive layer and that said foam layer has a density and thickness sufficient to have a resonant frequency of between about 150 and 300 Hz and a dynamic spring constant of between about 357 kg/cm and 1785 kg/cm when said foam is subjected to a vibration isolation test wherein a 6.54 $cm^2$ sample of the foam is adhered on an exciter table and a 500 gram weight with an accelerometer glued to the top of the weight is adhered to the opposite side of the foam sample, the exciter is swept with a frequency oscillator, and the signal from the accelerometer is analyzed to determine the resonant frequency for calculating the dynamic spring constant.

2. A mounting tape according to claim 1 characterized in that said reinforcing material is a strong polymeric film.

3. A mounting tape according to claim 2 characterized in that said film comprises a laminate of polyester and polyethylene to afford a good bond with said polymeric foam.

4. A mounting tape according to claim 1 characterized in that said reinforcing material comprises a scrim of polymeric material.

5. A mounting tape according to claim 4 characterized in that said scrim comprises nonwoven poly(hexamethylene adipamidel).

0206760

6. A mounting tape according to claim 1, 2, 3 or 4 characterized in that said polymeric cellular foam is closed cell polyethylene foam.

7. A mounting tape according to claim 1, 2, 3 or 4 characterized in that a pressure sensitive adhesive is coated onto the exposed surface of the foam.

0206760

FIG.1

FIG.2